# EUROPEAN PATENT APPLICATION

(11) **EP 4 733 880 A1**
(43) Date of publication of application: **29.04.2026**
(21) Application number: 24208813.6
(22) Date of filing: 25.10.2024
(51) Int. Cl.: G05D 7/00

(54) **A DIFFERENTIAL PRESSURE CONTROLLER AND A FLUID DISTRIBUTION SYSTEM COMPRISING SUCH A DIFFERENTIAL PRESSURE CONTROLLER**

(71) Applicant: IMI Hydronic Engineering International SA, 1262 Eysins (CH)
(72) Inventor: VOLOVEC, Peter, 8258 Kapele (SI)
(74) Representative: Zacco Sweden AB

(57) **Abstract**

A differential pressure controller comprises a differential pressure plug configured to change a variable cross-section of a flow passage between an inlet and an outlet of a valve body. A first movable membrane is connected to the differential pressure plug and has a first high-pressure membrane side and an opposite low-pressure membrane side. A second movable membrane is connected to the differential pressure plug and has a second high-pressure membrane side and an opposite intermediate-pressure membrane side. A spring element is arranged to exert a spring force on the differential pressure plug and arranged to hold the differential pressure plug in an end position when a differential pressure (P1-P2) between the second high-pressure membrane side and the intermediate-pressure membrane side is below a threshold value, wherein when said differential pressure (P1-P2) subsequently exceeds the threshold value the second movable membrane causes the differential pressure plug to move from said end position to reduce said variable cross-section of the flow passage.

## Description

### TECHNICAL FIELD

The present disclosure relates to a differential pressure controller configured to counteract pressure fluctuations occurring downstream and/or upstream of differential pressure controller in a fluid distribution system. The present disclosure also relates to a fluid distribution system comprising such a differential pressure controller.

### BACKGROUND ART

Fluid distribution systems, for e.g. heating, cooling and water supply, are designed to feed a fluid from a production source to a consumption point. Each consumption point typically has a calculated and designed flow and differential pressure requirement. However, depending on the type of system, the flow requirement is often variable overtime and can change with factors like seasonality (e.g. summer or winter), that changes the load from the consumption points, temperature changes of the system fluid, changes in consumption of the system fluid (e.g. for drinking water).

Control valve parts are frequently used in fluid distribution systems and have a variable opening such that the flow rates can be controlled. Because a control valve part may operate during varying system conditions, the control valve part may be complemented with a differential pressure valve part. An example of such a combined control valve part and differential pressure valve part is known from WO 2010/090572 A1. The differential pressure valve part limits the differential pressure over the control valve part. Therefore, the operating conditions for the control valve part may be maintained at an adequate level despite variations of the pressure level in the entire fluid distribution system.

As illustrated in WO 2010/090572 A1, the differential pressure valve part has a movable membrane which on one side is subjected to a relatively high pressure and on the other side subjected to a relatively low pressure. A change in pressure on one of the sides causes the membrane to move so that the differential pressure over the control valve part can be maintained within the differential pressure proportional band.

In prior art pressure independent control valves, which have a control valve part and a differential pressure valve part, it is desirable to keep several parameters of the valve, the so-called hysteresis and minimum differential pressure (DPmin), as low as possible. A drawback related to prior art differential pressure valve parts is that you need to balance the hardness/robustness of the membrane with the resulting hysteresis and DPmin. If you make the membrane very robust so that it has a long lifetime and can well withstand the operating pressure conditions, then the downside is that you obtain a too high DPmin and hysteresis which results in bad flow control. On the other hand, if you make a much softer membrane which is more easily movable and provides less friction, then although you achieve a low DPmin and hysteresis, and thus accurate flow control, its lifetime will be considerably shortened because it will burst more easily and cannot be exposed to high differential pressure.

Such differential pressure valve parts may be present not only in control valves, but also in other examples, such as in dynamic balancing valves. Furthermore, the differential pressure valve parts may even be provided as separate entities without being associated with a control of a balancing function. Nevertheless, the challenges in selecting appropriate membrane for the differential pressure valve parts is valid for all of the above examples.

Thus, irrespective of the specific implementation of a differential pressure valve part, there is clearly still room for improvement.

### SUMMARY OF THE INVENTION

An object of the present disclosure is to provide a differential pressure controller which at least partly alleviates the drawbacks of the prior art. This and other objects, which will become apparent in the following discussion, are accomplished by a differential pressure controller as defined in accompanying claim 1. Some non-limiting examples of the differential pressure controller are defining in the dependent claims.

The inventor has realized that the benefits of a softer membrane (good for flow control) and the benefits of a more robust membrane (good for long lifetime) may be combined by providing two membranes. By distributing the work to two separate membranes, and letting each membrane be subjected to a respective differential pressure, it is possible to, for example, allow one membrane which is subjected to a smaller differential pressure to be softer, whereas the other membrane which is subjected to a larger differential pressure be more robust. Thus, rather than trying to get one membrane to do everything, the inventor has realized that by providing two membranes, they may be designed differently if desired so that one membrane may be designed less robust to achieve a smaller DPmin and hysteresis, whereas the other membrane may be designed more robust to handle larges differential pressures.

Traditionally, membranes have normally been subjected to a differential pressure corresponding to the difference between a very variable high pressure at an inlet and a low pressure at an outlet. According to this disclosure, a first membrane may still be subjected to such a normal differential pressure, but by also adding a second membrane, which is not subjected to that large pressure difference but is instead subjected to an intermediate pressure, a smaller pressure difference may be allowed to act on the second membrane. This allows the second membrane to be designed as a membrane which is more easily deformable compared to the first membrane. Hereby, accurate control as well as long lifetime may be achievable.

According to a first aspect of the present disclosure, there is provided a differential pressure controller configured to counteract pressure fluctuations occurring downstream and/or upstream of the differential pressure controller in a fluid distribution system, wherein the differential pressure controller comprises:
- a valve body having an inlet configured to receive liquid into the valve body, an outlet configured to output the liquid from the valve body, and a flow passage extending between the inlet and the outlet for guiding the received liquid from the inlet to the outlet,
- a differential pressure plug configured to change a variable cross-section of the flow passage between the inlet and the outlet,
- a first movable membrane connected to the differential pressure plug, the first movable membrane having a first high-pressure membrane side and a low-pressure membrane side arranged opposite the first high-pressure membrane side, wherein the first high-pressure membrane side is arranged in fluid communication with the inlet and subjected to a high pressure (P1) present at the inlet, and wherein the low-pressure membrane side is arranged in fluid communication with the outlet and subjected to a low pressure (P3) present at the outlet,

- a second movable membrane connected to the differential pressure plug, the second movable membrane having a second high-pressure membrane side and an intermediate-pressure membrane side arranged opposite the second high-pressure membrane side, wherein the second high-pressure membrane side is arranged in fluid communication with the inlet and subjected to the high pressure (P1) present at the inlet, and wherein the intermediate-pressure membrane side is arranged in fluid communication with an intermediate section of the flow passage, at which intermediate section an intermediate pressure (P2) is present when liquid flows through the flow passage, said intermediate pressure (P2) being lower than said high pressure (P1) and higher than said low pressure (P3), wherein said intermediate-pressure membrane side is subjected to said intermediate pressure (P2) when liquid flows through the flow passage,
- a spring element arranged to exert a spring force on the differential pressure plug and arranged to hold the differential pressure plug in an end position when a differential pressure (P1-P2) between the second high-pressure membrane side and the intermediate-pressure membrane side is below a threshold value, wherein when said differential pressure (P1-P2) subsequently exceeds the threshold value the second movable membrane causes the differential pressure plug to move from said end position to reduce said variable cross-section of the flow passage.

Hereby, pressure fluctuations in said intermediate section of the flow passage can be efficiently counteracted. Since the second movable membrane reacts to a smaller differential pressure (P1-P2) than the traditional larger differential pressure (P1 - P3) which affects the first movable membrane, the second movable membrane may suitably be made to be more easily deformable than the first movable membrane. Making the second movable membrane more easily deformable will allow the differential pressure controller to be functional already at low differential pressures. Indeed, to be able to operate at all, a differential pressure controller normally needs a minimum differential pressure (DPmin) to overcome forces exerted by the spring element, friction forces and the tensile strength of the membrane. Such a DPmin can be greatly reduced by the present differential controller by the introduction of the second movable membrane which may be made relatively easily deformable (i.e. lower tensile strength) and subjected to said relatively low differential pressure P1-P2 to overcome the threshold value. At higher differential pressures the second movable membrane may share the operation with the first movable membrane, which may be more robust. Allowing DPmin to be reduced has a benefit in that pumping costs for pumping liquid through the fluid distribution system may be reduced, and therefore energy costs may also be reduced.

Thus, in simple terms, the second movable membrane may become engaged at low differential pressures, whereas the first movable membrane may take control at higher differential pressures.

The intermediate pressure P2 will normally always follow the high pressure P1. Thus, if the high pressure P1 changes at the inlet, then in the intermediate section, the pressure P2 will substantially follow the change so that the relatively low differential pressure P1-P2 will be substantially maintained within the differential pressure band of the differential pressure controller. Hereby, the second movable membrane will normally not be negatively affected by large pressure changes at the inlet.

The second movable membrane may be made more easily deformable than the first movable membrane in various conceivable ways. Below some different parameters will be discussed by way of examples.

In the flow passage between the inlet and the outlet, there may be a flow restriction upstream of said intermediate section of the flow passage. In some examples, a flow-through area of the flow restriction may be constant, whereas in some examples the flow-through area of the flow restriction may be variable (e.g. by using a control plug moving relative to a seat). Irrespective of the specific configuration of the flow restriction, there may be a pressure drop across the flow restriction such that instead of the high pressure (P1), which is present upstream of the flow restriction and at the inlet, the intermediate section, which is downstream of the flow restriction, may therefore obtain said intermediate pressure (P2) which is lower than said high pressure (P1).

As mentioned previously, the differential pressure plug is configured to change a variable cross-section of the flow passage between the inlet and the outlet. In particular, in at least some examples, the variable cross-section which is changeable by the differential pressure plug may suitably be located downstream of the intermediate section and upstream of the outlet. Hereby, a pressure drop may be achieved between the intermediate section (intermediate pressure (P2)) and the outlet (low pressure (P3)).

According to at least one example, the first movable membrane may have a first thickness, wherein the second movable membrane may have a second thickness, wherein the first thickness may be greater than the second thickness. Even if there are no other distinctions between the first and the second movable membranes, making the second movable membrane thinner than the first movable membrane would enable the second movable membrane to become more easily deformable than the first movable membrane. However, such a distinction in thickness may, of course, also be combined with other distinguishable parameters in other examples.

According to at least one example, the first movable membrane may have a first hardness, such as Shore hardness, e.g. expressed in Sh, wherein the second movable membrane may have a second hardness, wherein the first hardness may be higher than the second hardness. Even if there are no other distinctions between the first and the second movable membranes, making the second movable membrane less stiff than the first movable membrane would enable the second movable membrane to become more easily deformable than the first movable membrane. However, such a distinction in hardness may, of course, also be combined with other distinguishable parameters in other examples.

According to at least one example, the first movable membrane may be made of a different material, or composition of materials, than the second movable membrane. Thus, the second movable membrane may suitably be made of a material (including composition of materials) which is more deformable compared to the material (including composition of materials) of the first movable membrane. Examples of materials include different types of rubbers, such as EPDM rubber, HNBR rubber, etc. The first movable membrane may in some examples be based on the same material as the second movable membrane, but provided with additives, such as reinforcements. Thus, in such case the composition of materials will be different between the first movable membrane and the second movable membrane. For instance, the second movable membrane may be made of EPDM rubber without reinforcement, and the first movable membrane may also be made of EPDM but reinforced with Kevlar, glass fibre, fabric, or other suitable reinforcing materials. The percent of the reinforcement may, for example, be around 20-40%, such as around 30%.

According to at least one example, the differential pressure plug may be configured to be linearly movable back and forth along an axial direction, wherein the differential pressure plug may be caused to be pulled forwardly by a forward movement of at least one of the first movable membrane and the second movable membrane. Thus, when at least one of the first and second movable membranes move forwardly it may pull along the differential pressure plug. Suitably, both movable membranes may cooperate to pull along the differential pressure plug in a forward motion. Thus, the two movable membranes may cooperate to act on the differential pressure plug in a common direction.

In this disclosure the terms such as "forward" and "backward" are used to describe directions. From the above explanations, it should be clear that, in this disclosure, a forward movement of the differential pressure plug causes a reduction of said variable cross-section, whereas a rearward movement of the differential pressure plug causes an increase of said variable cross-section.

According to at least one example, the first high-pressure membrane side and the second high-pressure membrane side may face rearwardly with respect to the axial direction, wherein the low-pressure membrane side and the intermediate-pressure membrane side may both face forwardly with respect to the axial direction. Having the high-pressure membrane sides for both movable membranes facing rearwardly allows for the movable membranes to work in the same direction in a convenient manner.

According to at least one example, the first and the second high-pressure membrane sides may face away from the flow passage, whereas the low-pressure membrane side and the intermediate-pressure membrane side may face towards the flow passage. Thus, for a linearly movable differential pressure plug, this allows for the movable membranes to work in the same direction in a convenient manner.

According to at least one example, the first movable membrane may be annular, wherein the first movable membrane may encircle the second movable membrane. Hereby, a relatively compact membrane location may be achieved despite having two movable membranes. By being located radially outside of the second movable membrane, the first movable membrane will have a larger circumference than the second movable membrane, and can therefore conveniently, if desired, be provided with a larger effective area. Since the effective area of each membrane determines the force provided by the respective differential pressure acting on each area, a suitably dimensioning of the movable membranes may be selected.

It should be understood that although in the above example, only the first movable membrane has been explicitly described as being annular, in other examples the second movable membrane may also be annular. This may be advantageous in case it is desired to place the second movable membrane around some other structure, such as for example a rod, spindle or similar mechanical structure.

According to at least one example, the first movable membrane may have a radially outer peripheral area and a radially inner peripheral area, wherein the radially outer peripheral area of the first movable membrane may be connected to a static peripheral structure of the differential pressure controller, such as the valve body, wherein the radially inner peripheral area of the first movable membrane may be connected to the differential pressure plug. By having one periphery connected to a static peripheral structure (i.e. which is configured not to move when the differential pressure controller is used as intended), and another periphery connected to the differential pressure plug, the differential pressure plug can conveniently be caused to move relative to that static peripheral structure when the first movable membrane is being deformed. Put differently, the differential pressure plug can conveniently be caused to move within the valve body. From the above it should be understood that the connected radially outer peripheral area of the first movable membrane can remain unmovable when the rest of the first movable membrane, including the radially inner peripheral area, moves.

According to at least one example, the second movable membrane may have a radially outer peripheral area and a radially inner peripheral area, wherein the radially inner peripheral area of the first movable membrane may be connected to a static central structure of the differential pressure controller, wherein the radially outer peripheral area of the second movable membrane may be connected to the differential pressure plug. By having one periphery connected to a static central structure (i.e. which is configured not to move when the differential pressure controller is used as intended), and another periphery connected to the differential pressure plug, the differential pressure plug can conveniently be caused to move relative to that static central structure when the second movable membrane is being deformed. Put differently, the differential pressure plug can conveniently be caused to move within the valve body. From the above it should be understood that the connected radially inner peripheral area of the second movable membrane can remain unmovable when the rest of the second movable membrane, including the radially outer peripheral area, moves.

According to at least one example, the above-mentioned static central structure may suitably be a cage, such as a cage which surrounds an actuating spindle of a control valve part. Such a cage and actuating spindle will be discussed in more detail in relation to some illustrative examples below.

According to at least one example, said variable cross-section of the flow passage between the inlet and the outlet may be a first variable cross-section, wherein the differential pressure controller may further comprise a control valve part comprising:
- a seat;
- a control plug, and
- an actuating spindle configured to control the control plug to move towards or away from the seat to change a second variable cross section of the fluid passage between the inlet and the outlet.

Thus, the differential pressure controller may in this case function as a pressure independent control valve, PICV. A desired flow rate through the differential pressure controller can thus be set by controlling the position of the control plug. Having set the position of the control plug, the differential pressure plug, as controlled by the two membranes, will work to counteract pressure fluctuations so that the set flow rate can be substantially maintained.

According to at least one example, both the first movable membrane and the second movable membrane may be annular, wherein both the first movable membrane and the second movable membrane may encircle the actuating spindle of the control valve part. Hereby, a compact configuration is achievable for a differential pressure controller having the function of a PICV.

As mentioned previously in this disclosure, the intermediate pressure P2 will normally follow the changes of the high pressure P1 at the inlet, so that the pressure difference P1-P2 will remain substantially the same, and thus not affecting the second movable membrane negatively. However, there is one conceivable example, in which the second movable membrane may risk becoming overly extended if no counteracting arrangement is provided. This will now be discussed in relation to the following example.

According to at least one example, the differential pressure controller may further comprise an abutment surface, against which the intermediate-pressure membrane side of the second movable membrane is configured to land in a forward movement of the differential pressure plug against the spring force. A technical benefit may include that the abutment surface will counteract the second movable membrane to become overly extended. Thus, this may avoid a large differential pressure across the second movable membrane from over-stretching the second movable membrane due to the large differential pressure. As mentioned previously, under normal operation, the differential pressure across the second movable membrane is P1-P2 (difference between the high pressure at the inlet and the intermediate pressure at the intermediate section of the flow passage), which difference P1-P2 is normally substantially unchanged irrespective of changes in P1, because P2 will normally follow P1. However, in some cases it is conceivable that over time the differential pressure across the second movable membrane may become P1-P3 (difference between the high pressure at the inlet and the low pressure at the outlet). For instance, in examples having a control plug as discussed above, if the control plug is moved to a fully closed position against the seat, there will be no flow from the inlet of the valve body to the outlet of the valve body. Hereby, P1 will increase and cause the differential pressure plug to move forwardly. However, even if the differential pressure plug is moved to completely reduce the variable cross-section which it is configured to control, unless it is provided with proper sealing elements, it may not be tight enough between the intermediate section and the outlet, and there may be a leakage flow so that over time the intermediate section will change from having the intermediate pressure P2 to having the low pressure P3. As this change occurs over time, the differential pressure across the second movable membrane will gradually increase stretching the second movable membrane. A suitable placement of the abutment surface provides an area on which the second movable membrane may land to avoid over-stretching. On the other hand, if the differential plug is designed to completely seal off the intermediate section from the outlet, i.e. without any leakage flow, then the intermediate pressure P2 will remain in the intermediate section, in which case there is no need for a counteracting arrangement such as the above-mentioned abutment surface.

According to at least one example, said abutment surface may form part of an annular cage through which the actuating spindle extends. Providing such an annular cage may be beneficial as it may have additional functionality. For instance, in some examples the annular cage may present a static central structure to which the radially inner peripheral area of the second movable membrane is attached. In some examples, the annular cage may present a supporting area for the spring element. In some examples, the annular cage may be provided around the control plug and function as a guide for axial movement so the control plug.

According to a second aspect of the present disclosure, the is provided a fluid distribution system comprising the differential pressure controller according to the first aspect, including any example thereof. Technical benefits of the fluid distribution system of the second aspect may be largely analogous to the technical benefits of the differential pressure controller of the first aspect (including any example thereof).

Generally, all terms used in the claims are to be interpreted according to their ordinary meaning in the technical field, unless explicitly defined otherwise herein. All references to "a/an/the element, apparatus, component, part, means, step, etc." are to be interpreted openly as referring to at least one instance of the element, apparatus, component, part, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

According to at least one example, the longitudinal extension of the actuating spindle coincides with or is parallel with the axial direction. Thus, the control plug and the differential pressure plug may conveniently be operated to be movable along the same axial direction, or at least in parallel.

### BRIEF DESCRIPTION OF THE DRAWINGS

FIG. 1 is a very schematic illustration of a differential pressure controller according to at least one example of this disclosure.
FIG. 2 illustrates a differential pressure controller according to at least another example of this disclosure.
FIG. 3 illustrates an enlarged detailed view of a portion of FIG. 2.
FIG. 4 illustrates the differential pressure controller of FIG. 2 in a different state.
FIG. 5 illustrates a fluid distribution system according to at least one example of this disclosure.

### DETAILED DESCRIPTION

The present disclosure is described more fully below with reference to the accompanying drawings, in which certain aspects of the present disclosure are shown. The present disclosure may, however, be embodied in many different forms and should not be construed as limited to the embodiments and aspects set forth herein; rather, these embodiments are provided by way of example so that this disclosure will be thorough and complete, and will fully convey the scope of the present disclosure to those skilled in the art. Like numbers refer to like elements throughout the description.

It is to be understood that the present disclosure is not limited to the embodiments described herein and illustrated in the drawings; rather, the skilled person will recognize that many changes and modifications may be made within the scope of the appended claims.

When liquid travels through a valve body, liquid flow normally flows through a nominal cross-sectional area at the inlet and at the outlet of the valve body. However, there is normally a reduction in the available cross-sectional area for the liquid flow inside the valve body. This reduction causes a pressure drop across the valve body. In other words, there is a first pressure of the liquid at the inlet and a second pressure after the restriction. In case there is a further flow restriction inside the valve body, a further pressure drop may be provided, such a third pressure, at the outlet.

Differential pressure control mechanisms inside valve bodies typically require a minimum differential pressure, DPmin, to be operating. If DPmin is not reached, the differential pressure control mechanism will not operate, and an intentional nominal flow might not be reached. A differential pressure control mechanism comprising a membrane which is relatively easily deformable is advantageous in that it can be activated at a low differential pressure, i.e. a low DPmin. However, if the same membrane is subjected to a much higher differential pressure, then its lifetime will be rather short. On the other hand, if a differential pressure control mechanism comprises a membrane which is relatively hard to deform, then its lifetime will be long, but the DPmin will be at a much higher value.

The present disclosure provides a differential pressure controller which accomplishes a low DPmin as well as a long lifetime. In particular, the differential pressure controller comprises two movable membranes, one being subjected to relatively low differential pressure and the other one being subjected to relatively high differential pressure.

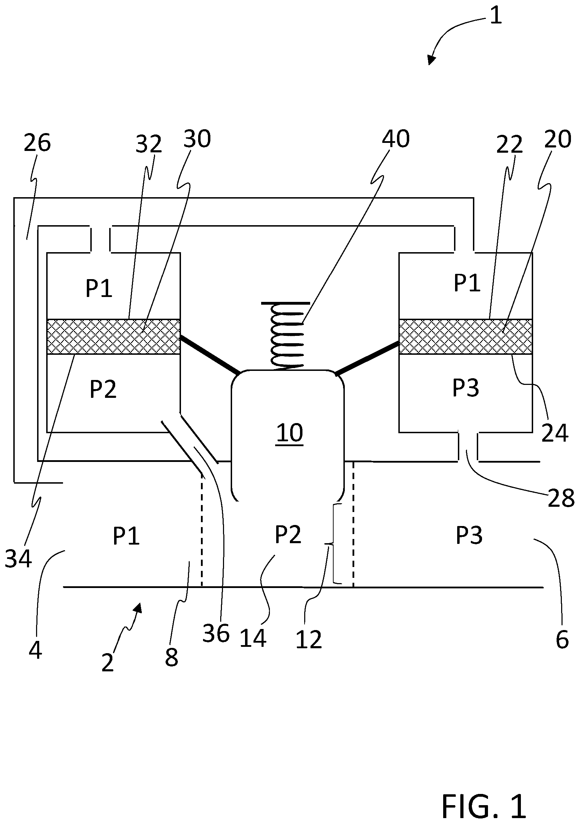

FIG. 1 is a very schematic illustration of a differential pressure controller 1 according to at least one example of this disclosure. The differential pressure controller 1 is configured to counteract pressure fluctuations occurring downstream and/or upstream of the differential pressure controller 1 in a fluid distribution system. The differential pressure controller 1 comprises a valve body 2 having an inlet 4 configured to receive liquid (such as water) into the valve body 2 and an outlet 6 configured to output the liquid from the valve body 2. A flow passage 8 extends between the inlet 4 and the outlet 6 for guiding the received liquid from the inlet 4 to the outlet 6. A differential pressure plug 10 is configured to change a variable cross-section 12 of the flow passage 8.

In this example, it is schematically indicated that a high pressure P1 is present at the inlet 4. There is also indicated that an intermediate pressure P2 is present at an intermediate section 14 of the flow passage (the intermediate section 14 has schematically been delineated by dashed vertical lines). Due to a pressure drop in the flow passage 8 the intermediate pressure P2 is lower than the high pressure P1 at the inlet 4. There is furthermore indicated that a low pressure P3 is present at the outlet 6, wherein due to a further pressure drop in the flow passage 8 the low pressure P3 is lower than the intermediate pressure P2.

As schematically indicated in FIG. 1, a first movable membrane 20 is connected to the differential pressure plug 10. The first movable membrane 20 has a first high-pressure membrane side 22 and a low-pressure membrane side 24 arranged opposite the first high-pressure membrane side 22. The first high-pressure membrane side 22 is arranged in fluid communication with the inlet 4 and subjected to the high pressure P1 present at the inlet 4. This is illustrated by a first path 26 fluidly interconnecting the inlet 4 with the first high-pressure membrane side 22. The low-pressure membrane side 24 is arranged in fluid communication with the outlet 6 and subjected to the low pressure (P3) present at the outlet 6. This is illustrated by a second path 28 fluidly interconnecting the outlet 6 with the low-pressure membrane side 24.

As schematically indicated in Fig. 1, there is also provided a second movable membrane 30 connected to the differential pressure plug 10. The second movable membrane 30 has a second high-pressure membrane side 32 and an intermediate-pressure membrane side 34 arranged opposite the second high-pressure membrane side 32. The second high-pressure membrane side 32 is arranged in fluid communication with the inlet 4 and subjected to the high pressure P1 present at the inlet 4. This is illustrated by said first path 26 also fluidly interconnecting the inlet 4 with the second high-pressure membrane side 32. The intermediate-pressure membrane side 34 is arranged in fluid communication with the intermediate section 14 of the flow passage 8, at which intermediate section 14 the intermediate pressure P2 is present when liquid flows through the flow passage 8. This is illustrated by a third path 36 fluidly interconnecting the intermediate section 14 with the intermediate-pressure membrane side 34. As mentioned previously, the intermediate pressure P2 is lower than the high pressure P1 and higher than said low pressure P3. Thus, the intermediate-pressure membrane side 34 is subjected to said intermediate pressure P2 when liquid flows through the flow passage 8.

As further illustrated in Fig. 1, the differential pressure controller 1 also comprises a spring element 40. The spring element 40 is arranged to exert a spring force on the differential pressure plug 10 and arranged to hold the differential pressure plug 10 in an end position when a differential pressure (P1-P2) between the second high-pressure membrane side 32 and the intermediate-pressure membrane side 34 is below a threshold value. This end position is normally set to provide the largest cross-section of said variable cross section 12 of the flow passage 8 controllable by the differential pressure plug 10. When said differential pressure (P1-P2) subsequently exceeds the threshold value the second movable membrane 32 causes the differential pressure plug 10 to move from said end position to reduce said variable cross-section 12 of the flow passage 8.

How easily deformable the second movable membrane 30 is will affect the threshold value. Thus, by selecting a second movable membrane 30 which is easily deformable, the differential pressure plug 10 can be operated already at a low differential pressure (P1-P2), i.e. at a low DPmin. This in turn allows the first movable membrane 20 to be made not as easily deformable as the second movable membrane 30. The first movable membrane 20 may thus be durable and cope well with larger differential pressures.

If desired, continued extension of the second movable membrane 30 may be arranged to be counteracted if too high differential pressures are present across the second movable membrane 30, so as to avoid premature tearing/wearing thereof. This may be achieved by any suitable counteracting arrangement. For instance, such counteraction may be achieved mechanically, such as by an element stopping further extension of the second movable membrane 30. Another example of such counteraction may be a pressure release mechanism which opens when a predefined differential pressure is present over the second movable membrane 30 to thereby reduce said differential pressure across the second movable membrane 30.

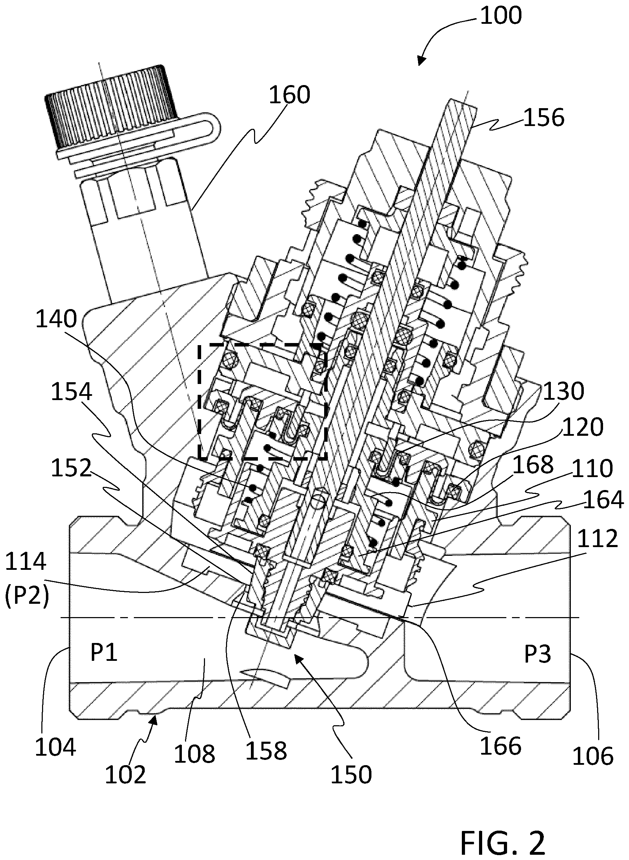

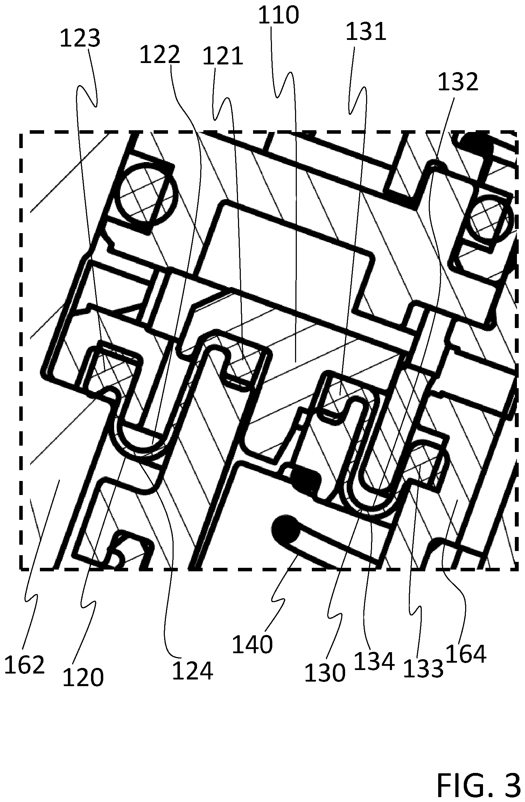

FIG. 2 illustrates a differential pressure controller 100 according to at least another example of this disclosure. FIG. 3 illustrates an enlarged detailed view of a portion of FIG. 2 marked by a dashed square.

Starting with FIG. 2, the differential pressure controller 100 comprises a valve body 102 having an inlet 104, and outlet 106 and a flow passage 108 between the inlet 104 and the outlet 106. The differential pressure controller 100 further comprises a differential pressure plug 110 configured to change a variable cross-section 112 of the flow passage 108 between the inlet 104 and the outlet 106.

FIG. 2 illustrates that the differential pressure controller 100 also comprises a control valve part 150. Thus, the differential pressure controller 100 may be considered to have the function of a pressure independent control valve, PICV. It should, however, be noted that the teachings of this disclosure are not limited to PICVs, but could be implemented in other types of valves, such as dynamic balancing valves or combined dynamic balancing and control valves, or just implemented as stand-alone pressure regulators.

In the illustrated example, the control valve part 150 comprises a seat 152, a control plug 154, and an actuating spindle 156 configured to control the control plug 154 to move towards or away from the seat 156 to change a second variable-cross section 158 of the fluid passage 108 between the inlet 104 and the outlet 106.

The longitudinal extension of the actuating spindle 156 coincides with an axial direction. This axial direction is common to the movements of the control plug 154 as well as the differential pressure plug 110. Thus, both the differential pressure plug 110 and the control plug 154 can be caused to move forwardly along the axial direction to reduce the first variable cross-section 112 and the second variable cross-section 158, respectively. Similarly, both the differential pressure plug 110 and the control plug 154 can be caused to move rearwardly along the axial direction to increase the first variable cross-section 112 and the second variable cross-section 158, respectively.

Movement of the control plug 154 is achieved by the actuating spindle 156. Thus, the position of the control plug 154 is adjustable by means of the actuating spindle 156. The actuating spindle 156 may also be called a shaft. The actuating spindle 156 may be turned by hand or by an actuator, such as a motorized actuator, to drive the actuator spindle 156 back and forth along the axial direction in order to increase the second variable cross-section 158 and to reduce the second variable cross-section 158. As the second variable cross-section 158 is reduced the flow rate of the liquid through the valve body 102 decreases. As the second variable cross-section 158 is increased the flow rate of the liquid through the valve body 102 increases. The valve body 102 may be provided with one or more measuring connections 160 for measuring said flow rate, pressure and/or temperature. A measuring connection 160 may be a measuring channel for receiving a measuring device, such as e.g. a measuring probe.

Movement of the differential pressure plug 110 can be achieved by means of either one of a first movable membrane 120 and a second movable membrane 130. With reference to the enlarged detailed view in FIG. 3, it can be seen that the first movable membrane 120 is connected to the differential pressure plug 110 at a radially inner peripheral area 121 of the first movable membrane 120. The second movable membrane 130 is connected to the differential pressure plug 110 at a radially outer peripheral area 131 of the second movable membrane 130.

The radially outer peripheral area 123 of the first movable membrane is connected to a static peripheral structure 162 of the differential pressure controller 100. Likewise, the radially inner peripheral area 133 of the second movable membrane 130 is connected to a static central structure 164 of the differential pressure controller 100. Thus, it should be understood that the movement of the movable membranes 120, 130 will not involve movement of these areas 123, 133 which are connected to the static structures 162, 164. However, the rest of the areas of the membranes 120, 130 can be caused to move in operation of the differential pressure plug 110. As best seen in FIG. 3, the static central structure 164 is in this example embodied in the form of an annular cage 164 through which the actuating spindle 156 extends. The annular cage 164 can also function as an axial guide for the movement of the control plug 154. Furthermore, the annular cage 164 may support a spring element 140, which will be discussed in more detail further below.

As can be seen in FIG. 2, the first movable membrane 120 is annular and encircles the second movable membrane 130. The second movable membrane 130 is also annular and encircles the actuating spindle 156.

With reference to FIG. 3, the first movable membrane 120 has a first high-pressure membrane side 122 which is arranged in fluid communication with the inlet 104 and is therefore subjected to a high pressure P1 present at the inlet 104. The second movable membrane 130 has a second high-pressure membrane side 132 which is also arranged in fluid communication with the inlet 104 and therefore subjected to the same high pressure P1. As can be understood from FIG. 3 in combination with FIG. 2, both the first and the second high-pressure membrane sides 122, 132 face rearwardly with respect to the axial direction.

The first movable membrane 120 also has low-pressure membrane side 124 arranged opposite the first high-pressure membrane side 122. The low-pressure membrane side 124 may thus face generally forwardly with respect to the axial direction. The low-pressure membrane side 124 is arranged in fluid communication with the outlet 106 and is thus subjected to the low pressure P3 present at the outlet 106.

The second movable membrane 130 also has an intermediate-pressure membrane side 134 arranged opposite the second high-pressure membrane side 132. The intermediate-pressure membrane side 134 may thus face generally forwardly with respect to the axial direction. The intermediate-pressure membrane side 134 is arranged in fluid communication with an intermediate section 114 of the flow passage 108 (see FIG. 2), at which intermediate section 114 an intermediate pressure P2 is present when liquid flows through the flow passage 108. When liquid flows through the flow passage 108 from the inlet 104 to the outlet 106, then the relationship between the pressures is P1 > P2 > P3.

The intermediate section 114 can in this example be represented by a section of the flow passage 108 located between the second variable cross-section 158 (controlled by the control plug 154) and the first variable cross-section 112 (controlled by the differential pressure plug 110). When liquid flows from the inlet 104 and first passes through the restriction (second variable cross-section 158) defined by the position of the control plug 154 relative to the seat 152, there will be a pressure drop from P1 to P2. As the liquid continues to flow through the next restriction (first variable cross-section 112) defined by the position of the differential pressure plug 110 relative to a wall portion 166, there will be a further pressure drop from P2 to P3, after which the liquid can flow through the outlet 106 and leave the valve body 102.

The fluid communication between the first high-pressure membrane side 122 and the inlet 104 leads to said high pressure P1 acting on the first high-pressure membrane side 122, resulting in a first force which is the product of said high pressure P1 and the area of the first high-pressure membrane side 122 subjected to said high pressure P1. Similarly, the fluid communication between the low-pressure membrane side 124 and the outlet 106 results in a second force which is the product of said low pressure P3 and the area of the low-pressure membrane side 124 subjected to said low pressure P3. A difference between the first and the second forces can control the movement of the first movable membrane 120 relative to the valve body 102. Similarly, a difference between forces acting on the second high-pressure membrane side 132 and the intermediate-pressure membrane side 134 can control the movement of the second movable membrane 130 relative to the valve body 102.

The first and second movable membranes 120, 130 are movable relative to the valve body 102, or at least parts of them (i.e. excluding areas of the membranes 120, 130 which are connected to said static structures 162, 164). The first and second movable membranes 120, 130 are suitably flexible membranes, for example made of an elastomeric material or composition of materials, as has been discussed previously in this disclosure.

The first and the second movable membranes 120, 130 act as barriers between the high-pressure inlet 104 relative to the low-pressure outlet 106. The fluid communication between the inlet 104 and the first and second high-pressure membrane sides 122, 132 may be provided by passages/conduits arranged in the valve body 102 in connection to the inlet 104. Similarly, the fluid communication between the outlet 106 and the low-pressure membrane side 124 may be provided by a passage/conduit arranged in the valve body 102 in connection to the outlet 106. Furthermore, the fluid communication between the intermediate section 114 and the intermediate-pressure membrane side 134 may also be provided by a passage/conduit arranged in the valve body 102. These passages/conduits are small relative to the inlet 104 and outlet 106. When fluid flows through the valve body 102, i.e., from the inlet 104 to the outlet 106, some fluid will flow into these passages/conduits to the movable membranes 120, 130. Furthermore, it should be noted that some of these passages/conduits may in addition to, or instead of, being arranged in the valve body 102, be arranged in other structures, such as the in the actuator spindle 156, the annular cage 164, etc.

The movable membranes 120, 130 may also be called diaphragms. The movable membranes 120, 130 may be so called rolling diaphragms with constant effective area, which can perform a large stroke in a small space.

As mentioned previously, the differential pressure controller 100 further comprises a spring element 140. The spring element 140 is here illustrated as being arranged around and supported by the annular cage 164, however, other configurations are also conceivable. The spring element 140 is arranged to exert a spring force on the differential pressure plug 110 and arranged to hold the differential pressure plug 110 in an end position when a differential pressure (P1-P2) between the second high-pressure membrane side 132 and the intermediate-pressure membrane side 134 is below a threshold value. When the differential pressure (P1-P2) subsequently exceeds the threshold value, the second movable membrane 130 causes the differential pressure plug 110 to move from said end position to reduce the first variable cross-section 112 of the flow passage 108. The end position may represent the furthermost that the differential pressure plug 110 can move in one direction, in this case in the axially rearwards direction. In other words, differential pressure plug 110 is in a limit state when in its end position. The movement of the differential pressure plug 110, controlled by the movable membranes 120, 130, compensates for fluctuations in pressure across the valve body 102.

Because the second movable membrane 130 will, under normal operating conditions, be subjected to a smaller differential pressure P1-P2 compared to the higher differential pressure P1-P3 to which the first movable membrane 120 will be subjected, the second movable membrane 130 may advantageously be made more flexible than the first movable membrane 120. In such case, at small differential pressures across the valve body 102 (assuming that also P1-P3 is rather low, and P1-P2 is even lower), the first movable membrane 120 may be too stiff to become activated by said rather low differential pressure P1-P3, whereas the more flexible second movable membrane 130 may be flexible enough to become activated by the even lower differential pressure P1-P2. Thus, the first and second movable membranes 120, 130 may suitably be distinguished in any suitable way. For example, the first movable membrane 120 may have a thickness which is greater than the thickness of the second movable membrane 130. The first movable membrane 120 may have a hardness which is higher than the hardness of the second movable membrane 130. The first movable membrane 120 may be made of a different material, or composition of materials (e.g. being reinforced as previously exemplified in this disclosure), as compared to the material, or composition of materials, of the second movable membrane 130.

When a large differential pressure is present across the valve body 102 the first movable membrane 120 can become activated to assist in, or take over, the controlling of the position of the differential pressure plug 110. The first movable membrane 120 may be configured to be more durable to high pressures than the second movable membrane 130. Therefore, if desired, in some examples, there may be provided a counteracting arrangement which counteracts excessive differential pressure acting on the second movable membrane 130. In FIG. 2 this is illustrated by an abutment surface 168 that forms part of the annular cage 164. When the intermediate-pressure membrane side 134 (indicated in FIG. 3) of the second movable membrane 130 becomes extended, it can come into contact with (land against) the abutment surface 168. Thus, in a forward movement of the differential pressure plug 110 caused by a large differential pressure across the first movable membrane 120, a continued extension of the second movable membrane 130 can be counteracted by the abutment surface 168. Hereby, the integrity of the material of the second movable membrane 130 can easily be maintained for a longer duration. It should be noted that the abutment surface 168 is just one example of such a counteracting arrangement, and that other arrangements may be provided to avoid over-extending the second movable membrane 130. For example, a pressure release mechanism may be provided which is triggered at a certain value of the differential pressure P1-P2.

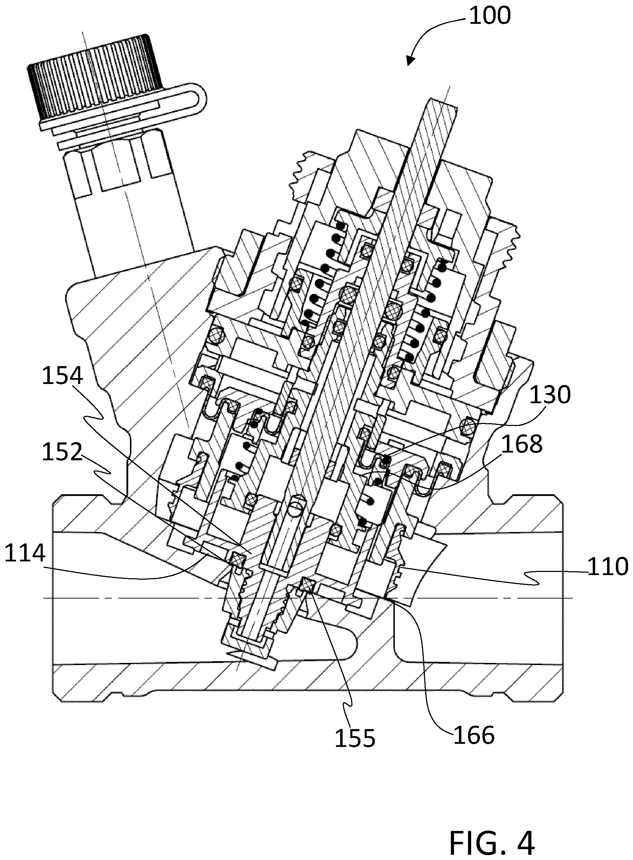

FIG. 4 illustrates the differential pressure controller 100 of FIG. 2 in a different state. In FIG. 4, the control plug 154 has been moved to a fully closed position against the seat 154. Thus, the second variable cross-section 158 in FIG. 2 has practically been reduced to zero in FIG. 4. The differential pressure plug 110 has also been moved forwards to reduce the first variable cross-section (indicated as 112 in FIG. 2) as much as possible. However, while the control plug 154 may be provided with a sealing element 155, the differential pressure plug 110 may only present a metal-to-metal contact with the mating wall portion 166. Thus, over time there will be a pressure equalization due to a small leakage at the interface between the differential pressure plug 110 and the mating wall portion 166. Therefore, over time the intermediate section 114 will also obtain the low pressure P3, causing extension of the second movable membrane 130, as it goes from being subjected to P1-P2, to a larger pressure difference of P1-P3. As explained in relation to FIG. 2, the abutment surface 168 may stop the second movable membrane 130 from becoming over-extended.

On the other hand, if the differential pressure plug 110 is also configured to provide a good seal, e.g. provided with similar sealing elements as the control plug 154, then the pressure P2 will be maintained in the intermediate section 114, in which case there would be no need for a counteracting arrangement such as the abutment surface 168.

Furthermore, under normal operation, when the control plug 154 is in an open position, the intermediate pressure P2 will substantially follow any pressure changes in P1, to substantially maintain the pressure difference P1-P2 within the differential pressure band of the differential pressure controller. Thus, when the control plug 154 is in an open position (irrespective of if the differential pressure plug 110 is provided with sealing elements or not), there is no substantial risk of over-stretching the second movable membrane 130.

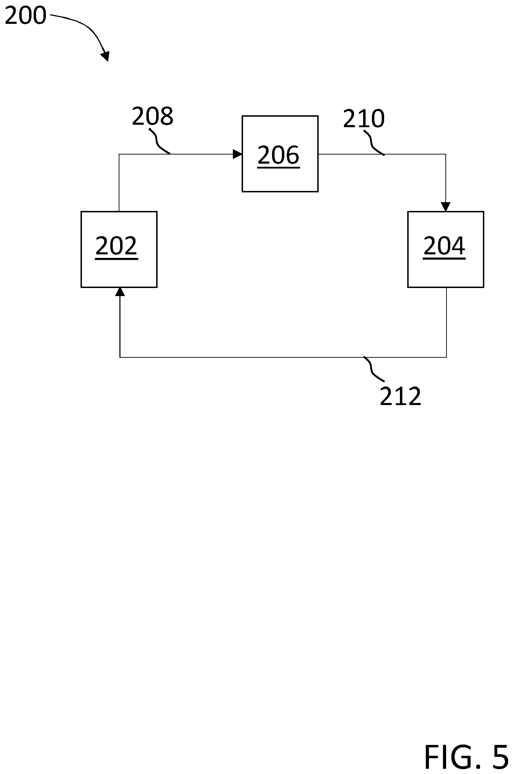

There is also disclosed herein a fluid distribution system comprising a differential pressure controller according to the discussions above. This will now be discussed below with reference to FIG. 5.

FIG. 5 illustrates schematically a fluid distribution system 200 according to at least one example of this disclosure. More specifically, the system 200 of FIG. 5 comprises a fluid source 202, such as a liquid tank, and fluid consumption point 204, such as a radiator. The system 320 also comprises a differential pressure controller 206. The differential pressure controller 206 may for example correspond to the differential pressure controller 1 of FIG. 1 or the differential pressure controller 100 of FIGS. 2-4, or any other example thereof discussed herein. Relative to the differential pressure controller 206, upstream 208 is between the differential pressure controller 206 and the fluid source 202, and downstream 210 is between the differential pressure controller 206 and the consumption point 204. Fluid, in particular liquid (such as water), is recirculated from the fluid consumption point 204 to the fluid source 202 via a return path 212.

## Claims

1. A differential pressure controller configured to counteract pressure fluctuations occurring downstream and/or upstream of the differential pressure controller in a fluid distribution system, wherein the differential pressure controller comprises:
- a valve body having an inlet configured to receive liquid into the valve body, an outlet configured to output the liquid from the valve body, and a flow passage extending between the inlet and the outlet for guiding the received liquid from the inlet to the outlet,
- a differential pressure plug configured to change a variable cross-section of the flow passage between the inlet and the outlet,
- a first movable membrane connected to the differential pressure plug, the first movable membrane having a first high-pressure membrane side and a low-pressure membrane side arranged opposite the first high-pressure membrane side, wherein the first high-pressure membrane side is arranged in fluid communication with the inlet and subjected to a high pressure (P1) present at the inlet, and wherein the low-pressure membrane side is arranged in fluid communication with the outlet and subjected to a low pressure (P3) present at the outlet,
- a second movable membrane connected to the differential pressure plug, the second movable membrane having a second high-pressure membrane side and an intermediate-pressure membrane side arranged opposite the second high-pressure membrane side, wherein the second high-pressure membrane side is arranged in fluid communication with the inlet and subjected to the high pressure (P1) present at the inlet, and wherein the intermediate-pressure membrane side is arranged in fluid communication with an intermediate section of the flow passage, at which intermediate section an intermediate pressure (P2) is present when liquid flows through the flow passage, said intermediate pressure (P2) being lower than said high pressure (P1) and higher than said low pressure (P3), wherein said intermediate-pressure membrane side is subjected to said intermediate pressure (P2) when liquid flows through the flow passage,
- a spring element arranged to exert a spring force on the differential pressure plug and arranged to hold the differential pressure plug in an end position when a differential pressure (P1-P2) between the second high-pressure membrane side and the intermediate-pressure membrane side is below a threshold value, wherein when said differential pressure (P1-P2) subsequently exceeds the threshold value the second movable membrane causes the differential pressure plug to move from said end position to reduce said variable cross-section of the flow passage.

2. The differential pressure controller according to claim 1, wherein the first movable membrane has a first thickness, wherein the second movable membrane has a second thickness, wherein the first thickness is greater than the second thickness.

3. The differential pressure controller according to any one of claims 1-2, wherein the first movable membrane has a first hardness, such as Shore hardness e.g. expressed in Sh, wherein the second movable membrane has a second hardness, wherein the first hardness is higher than the second hardness.

4. The differential pressure controller according to any one of claims 1-3, wherein the first movable membrane is made of a different material, or composition of materials, than the second movable membrane.

5. The differential pressure controller according to any one of claims 1-4, wherein the differential pressure plug is configured to be linearly movable back and forth along an axial direction, wherein the differential pressure plug is caused to be pulled forwardly by a forward movement of at least one of the first movable membrane and the second movable membrane.

6. The differential pressure controller according to claim 5, wherein the first high-pressure membrane side and the second high-pressure membrane side face rearwardly with respect to the axial direction, wherein the low-pressure membrane side and the intermediate-pressure membrane side both face forwardly with respect to the axial direction.

7. The differential pressure controller according to any one of claims 1-6, wherein the first movable membrane is annular, wherein the first movable membrane encircles the second movable membrane.

8. The differential pressure controller according to any one of claims 1-7, wherein the first movable membrane has a radially outer peripheral area and a radially inner peripheral area, wherein the radially outer peripheral area of the first movable membrane is connected to a static peripheral structure of the differential pressure controller, such as the valve body, wherein the radially inner peripheral area of the first movable membrane is connected to the differential pressure plug.

9. The differential pressure controller according to any one of claims 1-8, wherein the second movable membrane has a radially outer peripheral area and a radially inner peripheral area, wherein the radially inner peripheral area of the first movable membrane is connected to a static central structure of the differential pressure controller, wherein the radially outer peripheral area of the second movable membrane is connected to the differential pressure plug.

10. The differential pressure controller according to any one of claims 1-9, wherein said variable cross-section of the flow passage between the inlet and the outlet is a first variable cross-section, wherein the differential pressure controller further comprises a control valve part comprising:
- a seat;
- a control plug, and
- an actuating spindle configured to control the control plug to move towards or away from the seat to change a second variable cross section of the fluid passage between the inlet and the outlet.

11. The differential pressure controller according to claim 10 when dependent on claim 5 or 6, wherein the longitudinal extension of the actuating spindle coincides with or is parallel with the axial direction.

12. The differential pressure controller according to any one of claims 10-11, wherein the first movable membrane is annular, wherein the second movable membrane is annular, wherein both the first movable membrane and the second movable membrane encircle the actuating spindle of the control valve part.

13. The differential pressure controller according to any one of claims 1-12, further comprising an abutment surface, against which the intermediate-pressure membrane side of the second movable membrane is configured to land in a forward movement of the differential pressure plug against the spring force.

14. The differential pressure controller according to claim 13 when dependent on any one of claims 10-12, wherein said abutment surface forms part of an annular cage through which the actuating spindle extends.

15. A fluid distribution system comprising the differential pressure controller according to any one of claims 1-14.
